# EUROPEAN PATENT SPECIFICATION

(11) **EP 2 508 784 B1**
(45) Date of publication and mention of the grant of the patent: **08.01.2014**
(21) Application number: 11161734.6
(22) Date of filing: 08.04.2011
(51) Int. Cl.: F16L 37/092

(54) **Pipe Coupling**
Rohrkupplung
Raccord de tuyaux

(43) Date of publication of application: 10.10.2012
(73) Proprietor: Aronkasei Co., Ltd., Tokyo 141-0022 (JP)
(72) Inventor: Ota, Hiroshi, Tokai-shi Aichi (JP); Mizuno, Hirotoshi, Tokai-shi Aichi (JP); Kitajima, Norikazu, Tokai-shi Aichi (JP); Nakai, Yoshitaka, Tokai-shi Aichi (JP); Hasegawa, Hirokazu, Tokai-shi Aichi (JP)
(74) Representative: Reitstötter - Kinzebach

(56) References cited:
- EP-A1- 0 460 791
- EP-A1- 1 296 089
- EP-A1- 2 169 293
- WO-A1-2006/135227
- JP-A- 2009 019 645
- JP-A- 2010 230 094

## Description

### Field of the Invention

This invention relates to a pipe coupling for connecting one or more pipes in one-touch operation. More particularly, it relates to a pipe coupling comprising an inner lock ring and an outer lock ring each having a plurality of first pawls and a plurality of second pawls. When a pipe is inserted into the pipe coupling and then pulled back, the first pawls are urged against the pipe circumferentially and the second pawls are deformed by the interaction with tapered surrounding walls to be urged against the pipe circumferentially.

### Background Art

Various types of one-touch pipe coupling have already been known including JP(U) 04/18793A, JP2001/193883A and JP2003/227592A. These pipe couplings comprise an inner tubular member and an outer tubular member concentrically disposed around the inner tubular member. The outer tubular member defines a tapered inner circumferential surface which axially extends toward a pipe-insertion opening. A tubular lock ring having a plurality of dents or pawls is slidably received between the outer and inner tubular members. In use, a pipe to be coupled is inserted into the coupling to the fullest extent and then slightly pulled back until the lock ring reaches a position near the inlet opening of pipe whereupon the dents or pawls are urged against the outer surface of pipe by the interaction with the tapered inner surface of the outer tubular member to block the pipe from withdrawal.

It is necessary for the pipe coupling of this type to provide with means for preventing the lock ring from axial movement in the direction opposite to the pipe-insertion opening. Therefore, the lock ring is biassed toward the pipe-insertion opening by means of a spring or other biassing means.

JP2005/172218A discloses a similar one-touch pipe coupling dispensed with the inner tubular member for supporting the pipe inserted within the coupling radially inwardly.

WO 2006/135227 discloses another type of one-touch pipe coupling comprising an outer sleeve and an inner sleeve each having a tapered annular surface for narrowing the width of pipe-insertion opening, and an inner grip ring and an outer grip ring concentrically disposed around the inner grip ring, the outer grip ring and the inner grip ring being connected to one another and delimiting an annular space for receiving an end of pipe at the remotest position from the pipe-insertion opening.

In the above pipe coupling, a pipe to be connected is secured within the coupling first by inserting the pipe to the fullest extent and then pulled back such that the pipe end is gripped firmly between the inner and outer grip rings having respective dents by the interaction with respective tapered annular surfaces.

It is also necessary for the above pipe coupling to provide with means for preventing the grip ring from axial movement in the direction opposite to the pipe-insertion opening. Therefore, the pipe coupling is provided with one or more spring elements in the form of spring lips for biasing the grip rings toward the pipe-insertion opening.

All of one-touch pipe couplings discussed above comprising axially movable lock rings and interacting tapered walls have certain problems.

The pipe couplings of the type in which lock rings are axially movable require to have means for consistently biasing the lock rings toward the pipe-insertion opening to prevent withdrawal of the inserted pipe from the coupling. The distal end of the lock rings are, therefore, urged toward the insertion-opening even before insertion of pipe into the coupling so that the width of insertion-opening is narrowed. Accordingly, it is necessary to insert the pipe into the pipe coupling with a force sufficient for overcoming the biasing force applied to the lock rings without injuring inner and/or outer surfaces of the pipe with dents or pawls of the lock rings. Consequently, the sealing effect of a seal ring and the locking effect of lock rings are compromised.

We have disclosed in JP 2010/230094A a one-touch pipe coupling comprising axially movable lock rings wherein the lock ring strips are radially curved so that the lock ring strips are elongated axially upon applying pressure radially. The curved lock ring strips are deformed upon insertion of pipe into the coupling so that a pawl at the free end of each lock ring strip is forced against the outer or inner surface of the pipe. The one-touch pipe coupling comprising curved and elongatable lock ring strips also has a defect that the resistance to the insertion of pipe into the coupling caused by the lock ring strips having pawls cannot be minimized.

One-touch pipe couplings of another type comprising axially non-movable lock rings are disclosed in JP 09/236190A, JP 2006/118704A and JP 2008/164074A. The pipe couplings of this type comprise an inner tubular member integrally formed with the coupling main body and an outer tubular member concentrically disposed around the inner tubular member for defining a chamber for receiving an end of pipe to be connected, and an annular lock ring fixedly secured on the outer surface of inner tubular member. A plurality of dents or pawls protrude radially outwardly from the outer surface of inner tubular member for preventing withdrawal of the pipe from the coupling by being forced against the inner surface of the pipe.

A similar type of pipe couplings is disclosed in JP 2002/106772A and JP 2003/307290A. In these pipe couplings, a plurality of dents or pawls protrude radially inwardly from the inner surface of outer tubular member so that the plurality of dents or pawls are forced against the outer surface of pipe inserted into the coupling.

In the pipe couplings comprising non-movable annular lock rings discussed above, it is necessary for each dent or pawl to protrude sufficiently from the surface of inner or outer tubular member for forcibly pressing the surface of inserted pipe. The pipe couplings comprising non-movable lock rings usually exhibit increased resistance and increased injury to the inner or outer surface of pipe upon insertion of pipe into the coupling compared with the pipe couplings comprising movable lock rings thereby compromising the sealing effect of seal rings or requiring displacing them behind the lock rings.

### List of Cited Prior Art

JP(U) 04/18793A, JP2001/193883A, JP2003/227592A, JP2005/172218A, WO 2006/135227, JP 2010/230094A, JP 09/236190A, JP 2006/118704A, JP 2008/164074A, JP 2002/106772A and JP 2003/307290A.

### Brief Summary of the Invention

A principal object of the present invention is, therefore, to provide a one-touch pipe coupling which is simple in construction and reliable in performance of the type in which a pipe to be connected is firmly locked by a pair of lock rings each having a plurality of first pawls and a plurality of second pawls which allow the insertion of pipe easily without injuring the inner or outer pipe surface.

As a result of intensive efforts and study, we have solved various problems associated with prior art one-touch pipe couplings by providing a tubular lock ring of the pipe coupling with a plurality of first pawls configured to follow the movement of inserted pipe, and a plurality of second pawls functioning to lock the pipe when applying to the inserted pipe a force for withdrawing from the pipe coupling.

Accordingly, the present invention provides a pipe coupling comprising:
a main body;
an inner tubular member extending from the main body in axially outer direction and having a radially outwardly extending terminal wall and a tapered annular wall inclining outwardly in axially outer direction;
an outer tubular member surrounding the inner tubular member, the inner and outer tubular members defining a space for receiving an end of pipe therebetween; and
a tubular inner lock ring having a plurality of cantilever strips each having a free end separated by a plurality of axially extending slits, the inner lock ring carrying a plurality of radially outwardly protruding first pawls for applying a pressure against the inner surface of said pipe upon elastic deformation of the inner lock ring and a plurality of radially outwardly protruding second pawls at said free end for locking said pipe when withdrawing the pipe, said inner lock ring being movable in said space for receiving the pipe between said terminal wall and said tapered annular wall;
characterized in that, when said pipe is inserted in said space for receiving the pipe in place and then moved in a direction for withdrawing the pipe, said inner lock ring is moved together with the pipe in the same direction as a consequence of the engagement of said outwardly protruding first pawls with the inner surface of said pipe, and the free end of said inner lock ring overlies on said tapered annular wall area whereby said inner lock ring is expanded radially outwardly to urge said outwardly protruding second pawls against the inner surface of said pipe.

The present invention also provides a pipe coupling comprising:
a main body;
an inner tubular member extending from the main body in axially outer direction;
an outer tubular member surrounding the inner tubular member and having a radially inwardly extending terminal wall and a tapered annular wall inclining inwardly in axially outer direction, the inner and outer tubular members defining a space for receiving an end of pipe therebetween; and
a tubular outer lock ring having a plurality of cantilever strips each having a free end separated by a plurality of axially extending slits, the outer lock ring carrying a plurality of radially inwardly protruding first pawls for applying a pressure against the outer surface of said pipe upon elastic deformation of the outer lock ring and a plurality of radially inwardly protruding second pawls at said free end for locking said pipe when withdrawing the pipe, said outer lock ring being movable in said space for receiving the pipe between said terminal wall and said tapered annular wall;
characterized in that, when said pipe is inserted in said space for receiving the pipe in place and then moved in a direction for withdrawing the pipe, said outer lock ring is moved together with the pipe in the same direction as a consequence of the engagement of said inwardly protruding first pawls with the outer surface of said pipe, and the free end of said outer lock ring overlies on said tapered annular wall area whereby said outer lock ring is shrinked radially inwardly to urge said inwardly protruding second pawls against the outer surface of said pipe.

The present invention further provides a pipe coupling comprising:
a main body;
an inner tubular member extending from the main body in axially outer direction and having a radially outwardly extending terminal wall and a tapered annular wall inclining outwardly in axially outer direction;
an outer tubular member surrounding the inner tubular member and having radially inwardly extending terminal wall and a tapered annular wall inclining inwardly in axially outer direction, the inner and outer tubular members defining a space for receiving an end of pipe therebetween;
a tubular inner lock ring having a plurality of cantilever strips each having a free end separated by a plurality of axially extending slits, the inner lock ring carrying a plurality of radially outwardly protruding first pawls for applying a pressure against the inner surface of said pipe upon elastic deformation of the inner lock ring and a plurality of radially outwardly protruding second pawls at said free end for locking said pipe when withdrawing the pipe, said inner lock ring being movable in said space for receiving the pipe between said terminal wall and said tapered annular wall; and
a tubular outer lock ring having a plurality of cantilever strips each having a free end separated by a plurality of axially extending slits, the outer lock ring carrying a plurality of radially inwardly protruding first pawls for applying a pressure against the outer surface of said pipe upon elastic deformation of the outer lock ring and a plurality of radially inwardly protruding second pawls at said free end for locking said pipe when withdrawing the pipe, said outer lock ring being movable in said space for receiving the pipe between said terminal wall and said tapered annular wall;
characterized in that, when said pipe is inserted in said space for receiving the pipe in place and then moved in a direction for withdrawing the pipe, said inner lock ring is moved together with the pipe in the same direction as a consequence of the engagement of said outwardly protruding first pawls with the inner surface of said pipe, and the free end of said inner lock ring overlies on said tapered annular wall area whereby said inner lock ring is expanded radially outwardly to urge said outwardly protruding second pawls against the inner surface of said pipe; and said outer lock ring is moved together with the pipe in the same direction as a consequence of the engagement of said inwardly protruding first pawls with the outer surface of said pipe, and the free end of said outer lock ring overlies on said tapered annular wall area whereby said outer lock ring is shrinked radially inwardly to urge said inwardly protruding second pawls against the outer surface of said pipe.

The main body and the inner and outer tubular members have generally cylindrical shape. The main body and the inner tubular member may be molded integrally to define a fluid passage opening therein. The distal end of the passage opening preferably has a funnel shape for decreasing the flow resistance of fluid. All of the main body and the inner and outer tubular members may preferably be molded integrally in one piece for increasing the productivity and for saving the production cost.

In cases where the outer tubular member is a discrete part of the main body, the outer tubular member may be attached to the main body by either interference fitting or loose fitting to allow relative rotation. In the latter case, it is possible to relieve a bending or rotational force applied to the pipe during or after connection.

The outer tubular member preferably extends at the distal end longer than the inner tubular member to protect the inner tubular member from damages caused by impacts and limit the damages to the outer tubular member.

The materials from which the main body, inner and outer tubular members are fabricated may be chosen from relatively rigid materials such as rigid plastics or metals. Preferable plastics include polyphenylene sulfone (PPSU) and polyphenylene sulfide (PPS) resins.

According to the present invention, the outer tubular member is concentrically disposed around the inner tubular member integrally molded with the main body to define a space or chamber for receiving an end of pipe to be connected. Within the space or chamber, a lock ring having first pawls for pressing the pipe end when the pipe is inserted and second pawls for locking the pipe is disposed in axially movable manner when the connected pipe is pulled in a direction for withdrawing. The lock ring may be provided either on the outer surface of inner tubular member or inner surface of outer tubular member alone. However, the lock ring is preferably provided on both of the outer surface of inner tubular member and the inner surface of outer tubular member. This assures firm gripping of pipe when a force is exerted in a direction to withdraw the pipe.

In order to dispose an inner lock ring, the outer surface of inner tubular member is provided with a radially extending terminal wall and an inclined annular surface for progressively increasing the diameter of inner tubular member axially outwardly. Similarly, the inner surface of outer tubular member is provided with a radially extending terminal wall and an inclined annular surface for progressively decreasing the diameter of outer tubular member axially outwardly. The inner and outer lock rings are disposed between the respective terminal wall and inclined annular surface and, therefore, the axial movement in one direction is restricted by the terminal wall while allowing the axial movement in the other direction by an interaction with the inclined annular surface. The free ends of inner and outer lock rings are thus positioned axially outwardly from the terminal wall and have second pawls at the free ends.

The inner lock ring disposed around the outer surface of inner tubular member is of generally tubular or barrel shape having a bulged portion. A plurality of axially extending slits are cut out at one end to separate the inner lock ring into a plurality of cantilever strips. The inner lock ring comprises a plurality of radially outwardly protruding first pawls and a plurality of radially outwardly protruding second pawls each carried by the cantilever strip at its free end. The first pawls are urged against the inner surface of pipe by elastic deformation of the inner lock ring when the pipe is inserted. The second pawls function to lock the pipe when pulling the pipe in a direction for withdrawing.

The first pawls may be made elastically deformable by fabricating the inner lock ring entirely or only in part of pawl carrying section from an elastically deformable material. In the former case, the inner lock ring is preferably cut into a plurality of axially extending cantilever strips at one end and imparted with a radially outwardly bulged portion.

The bulged portion of the inner lock ring is thus deformed radially inwardly upon applying a force for squeezing the diameter. When releasing the squeezing force, the inner lock ring applies a pressure on the inner surface of the connected pipe. Since the bulged portion is also separated into a plurality of axially extending strips, each strip is more deformable in the bulged portion carrying a first pawl than in the free end thereof.

As a result, when a pipe is inserted into the pipe receiving space or chamber in position and then pulled back, the first pawls are urged against the inner surface of pipe to entrain the inner lock ring with the movement of inserted pipe. At the same time, the free end of inner lock ring is displaced over the inclined annular surface and expanded radially outwardly whereby the plurality of second pawls are forced against the inner surface of inserted pipe.

In the pipe coupling of the present invention, a plurality of outwardly protruding first pawls are thus carried by the inner lock ring at the bulged portion thereof to apply a pressure on the inner surface of inserted pipe, while a plurality of outwardly protruding second pawls are carried at the free end of inner lock ring such that the second pawls are normally not contacted under pressure with the inner surface of inserted pipe. Accordingly, a pipe may easily be inserted into the pipe coupling but steadily and firmly locked by the interaction between the second pawls and the inclined annular wall when the pipe is pulled in a direction for withdrawing.

In the pipe coupling of the present invention, since the inner lock ring is necessarily moved with the inserted pipe when the inserted pipe is pulled in a direction for withdrawing, it is not necessary to constantly bias the lock ring toward the opening for inserting a pipe by a spring as in the prior art pipe coupling comprising a movable lock ring.

Similar to the inner lock ring, the outer lock ring disposed around the inner surface of outer tubular member is of generally tubular or cylindrical shape having a shrinked portion. A plurality of axially extending slits are cut out at one end to separate the outer lock ring into a plurality of cantilever strips. The outer lock ring comprises a plurality radially inwardly protruding first pawls and a plurality of radially inwardly protruding second pawls each carried by the cantilever strip at its free end. The first pawls are urged against the outer surface of pipe by elastic deformation of the outer lock ring when the pipe is inserted. The second pawls function to lock the pipe when pulling the pipe in a direction for withdrawing.

The first pawls may be made elastically deformable by fabricating the inner lock ring entirely or only in part of pawl carrying section from an elastically deformable material. The outer lock ring is preferably cut into a plurality of axially extending cantilever strips at one end and imparted with a radially inwardly shrinked portion.

The shrinked portion of the outer lock ring is thus deformed radially outwardly upon applying a force for expanding the diameter. When releasing the expanding force, the outer lock ring applies a pressure on the outer surface of the connected pipe. Since the shrinked portion is also separated into a plurality of axially extending strips, each strip is more deformable in the shrinked portion carrying a first pawl than in the free end thereof.

As a result, when a pipe is inserted into the pipe receiving space or chamber in position and then pulled back, the first pawls are urged against the outer surface of pipe to entrain the outer lock ring with the movement of inserted pipe. At the same time, the free end of outer lock ring is displaced over the inclined annular surface and squeezed radially inwardly whereby the plurality of second pawls are forced against the outer surface of inserted pipe.

In the pipe coupling of the present invention, a plurality of inwardly protruding first pawls are thus carried by the outer lock ring at the shrinked portion thereof to apply a pressure on the outer surface of inserted pipe, while a plurality of inwardly protruding second pawls are carried at the free end of outer lock ring so that normally the second pawls are not contacted under pressure with the outer surface of inserted pipe. Accordingly, a pipe may easily be inserted into the pipe coupling but steadily and firmly locked by an interaction between the second pawls and the inclined annular wall when the pipe is pulled in a direction for withdrawing.

In the pipe coupling of the present invention, since the outer lock ring is necessarily moved with the inserted pipe when the inserted pipe is pulled in a direction for withdrawing, it is not necessary to constantly bias the lock ring toward the opening for inserting a pipe by a spring as in the prior art pipe couplings comprising a movable lock ring.

The inner and outer surface of a pipe to be inserted are kept substantially free of injury when the pipe is inserted. In the prior art pipe coupling comprising a movable or unmovable lock rings, the inner or outer surface of pipe is often injured by the pawls when the pipe is inserted. Moreover, the locking effect and the sealing effect by the inner lock ring or outer lock ring of the pipe coupling of the present invention are further improved by the use of one or more seal rings as will be discussed below.

In an embodiment, the pipe coupling is provided with both of an inner lock ring and an outer lock ring. In this embodiment, the first pawls on the inner lock ring and the first pawls on the outer lock ring may be disposed one another either in axially displaced positions or radially aligned positions to apply a pressure on the inserted pipe. Similarly, the second pawls on the inner lock ring and the second pawls on the outer lock ring may be disposed one another either in axially displaced positions or radially aligned positions to lock the inserted pipe.

When both of first pawls on the inner lock ring and the outer lock ring are disposed in axially displaced positions one another, the pipe may be inserted into the coupling with less resistance at one time than when both of the first pawls on the inner lock ring and the outer lock ring are disposed in radially aligned positions. The first pawls on the inner lock ring are preferably located at a position where the distance of bulged portion from the center axis of the inner lock ring is maximum. Similarly, the first pawls on the outer lock rings are preferably located at a position where the distance of shrinked portion from the center axis of the outer lock ring is minimum. This location allows both of the first pawls on the inner lock ring and the outer lock ring to deform to the fullest extent radially outwardly or radially inwardly without compromising the flexibility and without increasing the resistance of the pawls when pipe is inserted.

When both of the second pawls on the inner lock ring and the outer lock ring are located at axially displaced positions, a seal ring may be disposed at a position opposite to the first pawls to obtain improved sealing of the inserted pipe in the pipe receiving space of the coupling. When both of the second pawls on the inner lock ring and the outer lock ring are located at radially aligned positions, the pipe may be inserted in the receiving space without tilting.

The material from which inner and outer lock rings are fabricated is chosen from plastics or metals. When a plastic material is chosen, so-called engineering plastics such as polyphenylene sulfone (PPSU) or polyphenylene sulfide (PPS) are preferred.

The pipe coupling according to the present invention preferably comprises at least one seal ring to seal the gap between the inner tubular member and the pipe and/or the gap between the outer tubular member and the pipe. The seal ring may be fixedly received in an annular groove formed on the outer surface of inner tubular member and/or the inner surface of outer tubular member. The cross-sectional shape or contour of seal ring may be circular, rectangular, concave, lip or other shapes.

The seal ring may be provided on the outer surface of inner tubular member or on the inner surface of outer tubular member or on both surfaces. However, one or more seal rings are preferably provided at least on the outer surface of inner tubular member to prevent dust or other foreign matters from entering the interior of connected pipe. The seal ring disposed on the outer surface of inner tubular member is effective to prevent the exposed end of three layered aluminum pipe from corrosion.

More than one seal rings may be disposed on the same outer surface of inner tubular member or the same inner surface of outer tubular member. However, at least one seal ring is preferably disposed at a position spaced apart from the second pawls of the lock ring axially outwardly to obtain a high sealing effect against an intact surface of the connected pipe.

The seal ring is preferably located at an opposed position to outwardly protruding or inwardly protruding second pawls to increase the sealing effect with the aid of second pawls. In cases where a seal ring is disposed on the outer surface of inner tubular member, the seal ring is preferably located at a position spaced apart from outwardly protruding second pawls of the inner lock ring axially outwardly to avoid damages upon insertion of pipe. In this case, the outwardly protruding second pawls of the inner lock ring are preferably located axially inwardly from the inwardly protruding second pawls of outer lock ring.

When more than one seal rings are disposed on the same surface, it is preferably to dispose two seal rings on both sides of the lock ring, one axially inwardly and the other axially outwardly. It is also possible to dispose two seal rings together on the axially outward side of the lock ring to avoid damages upon insertion of pipe. In either case, the seal ring disposed at a position spaced apart from the second pawls axially outwardly is preferably opposed to the corresponding second pawls carried by the opposed tubular member to improve the sealing effect and the locking effect.

The outer tubular member of the pipe coupling of the present invention may comprise at least one opening for confirming whether a pipe has been inserted into a space for receiving the pipe end in place. The opening extends radially through the outer tubular member at a position displaced from the outer lock ring axially inwardly whereby whether the distal end of pipe has been inserted in place within a space or chamber for receiving the pipe may be visually confirmed.

In order to assist the above confirmation, a rod-like member having tapered surface at distal end may be inserted into the pipe-receiving space through said opening. When a pipe is inserted into the receiving space, the distal end thereof abuts on the tapered end surface and pushes up the rod-like member to protrude further from the outer tubular member. In another embodiment, said rod-like member may be connected to a C-shaped or O-shaped ring received in the space for receiving the pipe. When a pipe is inserted into the receiving space, the C-shaped or O-shaped ring is advanced within receiving space toward the terminal wall to completely retract the rod-like member from the outer surface of the pipe coupling.

In another embodiment, a profiled ring having an annular groove for receiving the distal end of pipe on one side and a rounded surface on the other side may be placed in the pipe-receiving space with the annular groove facing the opening for inserting a pipe.

When a pipe is inserted into the receiving space, the distal end thereof is engaged in the annular groove of profiled ring to protect the inner and outer lock rings, seal rings and other parts from being damaged by a sharp or unchamfered edge of pipe. The profiled ring is preferably fabricated from a lubricative plastic such as nylon.

In accordance with the present invention, there is provided a pipe coupling comprising a plurality of first pawls to move lock rings following the movement of the pipe and a plurality of second pawls for locking the pipe. Consequently, the pipe is steadily and firmly locked in position by applying a force for withdrawing the pipe. The pipe may be inserted into the coupling with decreased resistance by dents or pawls of lock rings without damaging the outer and/or inner surface of the pipe.

When one or more seal rings are applied to seal the gap between the pipe and the inner tubular member and/or the outer tubular member, a high sealing effect is accomplished by virtue of additional sealing effect of second pawls.

### Brief Description of the Drawings

Fig. 1 depicts a preferred embodiment of the pipe coupling according to the present invention in a perspective view.
Fig. 2 is a cross-sectional view of the pipe coupling shown in Fig.1 taken along the center axis thereof.
Fig. 3 is a perspective view of the inner tubular member of the pipe coupling shown in Fig. 1.
Fig. 4 is a cross-sectional view of the inner tubular member shown in Fig. 3 taken along the center axis thereof.
Fig. 5 is a perspective view of the outer tubular member of the pipe coupling shown in Fig. 1.
Fig. 6 is a cross-sectional view of the outer tubular member shown in Fig. 5 taken along the center axis thereof.
Fig. 7 is a perspective view of the inner lock ring of the pipe coupling shown in Fig. 1.
Fig. 8 is a cross-sectional view of the inner lock ring shown in Fig. 7 taken along the center axis thereof.
Fig. 9 is a perspective view of the outer lock ring of the pipe coupling shown in Fig. 1.
Fig. 10 is a cross-sectional view of the outer lock ring shown in Fig. 9 taken along the center axis thereof.
Fig. 11 is a cross-sectional view of the pipe coupling shown in Fig. 1 taken along the center axis thereof.
Fig. 12 schematically depicts in cross-section the process for connecting a pipe into the pipe coupling shown in Fig. 1

### Detailed Description of the Preferred Embodiments

Now a preferred embodiment of the pipe coupling of the present invention will be described in detail by making reference to the accompanying drawings. The invention is, however, not limited to the embodiment shown in the accompanying drawings but various modifications may be made thereto without departing from the scope and the principle of the present invention.

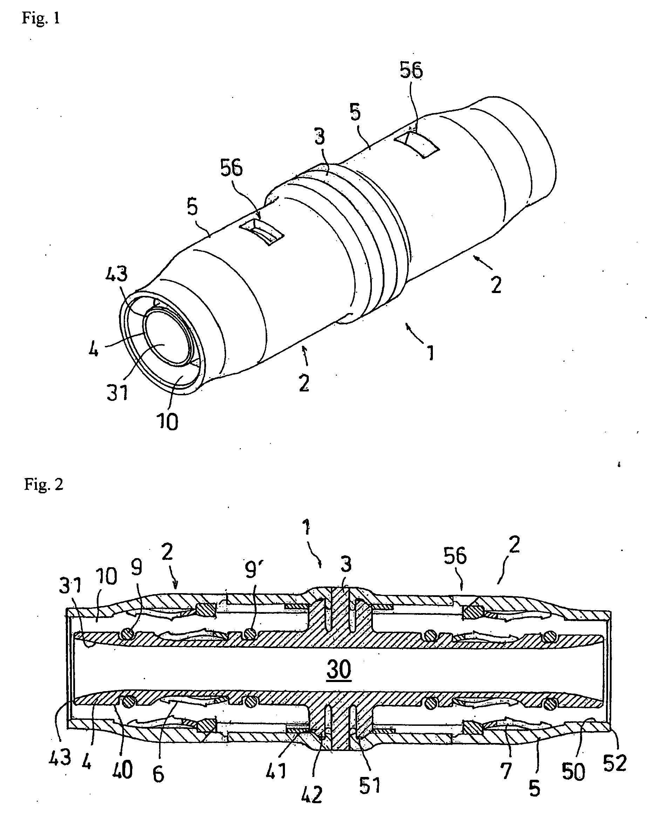

A one-touch typed pipe coupling 1 according to an embodiment of the present invention is shown in Fig. 1. The pipe coupling 1 shown in Fig. 1 has two insertion sockets 2. However, the invention is not limited to the I-shaped pipe coupling having two insertion socket 2 but encompasses pipe couplings having, for example, a single insertion socket 2 on one side and an insertion socket 2 of conventional design on the other side. Also encompassed are, for example, pipe couplings having three insertion sockets 2 in Y-shape or having four inserting sockets in X-shape. In the pipe coupling having two or more insertion sockets 2, the size of insertion sockets 2 may be of the same size or of different sizes for accommodating pipe of different diameters.

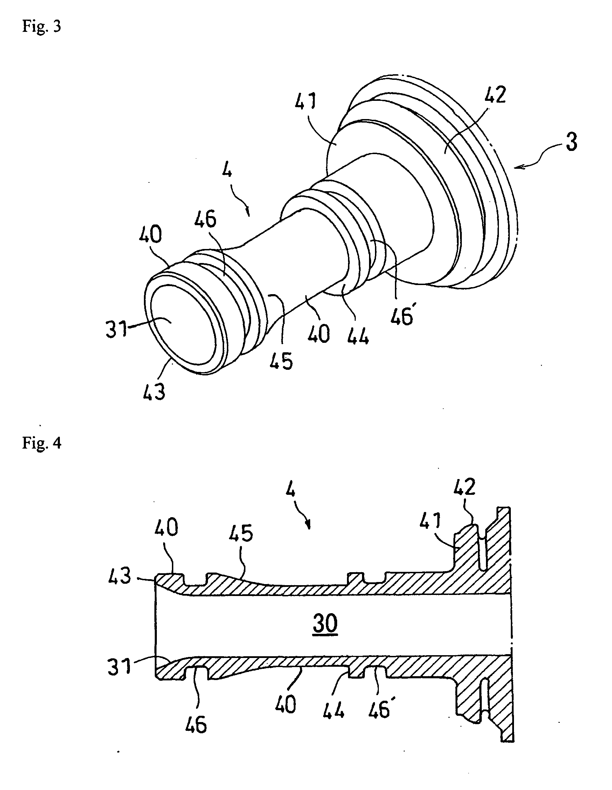

The pipe coupling 1 includes a main body 3, an inner tubular member 4, an outer tubular member 5, an inner lock ring 6, and an outer lock ring 7, all of generally tubular shape as shown in a Fig. 2. In the illustrated embodiment shown in Fig. 3, the main body 3 and the inner tubular member 4 are integrally molded in one piece. A fluid passage opening 30 is defined through the main body 3 and the inner tubular member 4. The both ends 31 of the passage opening each have a funnel shape to decrease the flow resistance of fluid. All of the main body 3, the inner tubular member 4 and the outer tubular member 5 may also be integrally molded in one piece for increasing the productivity and for saving the production cost.

The main body 3, the inner tubular member 4 and/or the outer tubular member 5 may be made from relatively rigid plastic materials or metals. Preferably plastic materials include polyphenylene sulfone (PPSU) and polyphenylene sulfide (PPS).

As shown in Fig. 2, the inner tubular member 4 comprises a flange 41 on the outer surface at the axially inner side for engaging with the annular groove 51 on the inner surface 50 of the outer tubular member 5 at a position corresponding to the flange 41. The outer tubular member 5 is concentrically mounted around the inner tubular member by the engagement of the annular flange 41 having an outer annular edge 42 with the annular groove 51 either rotatably or non-rotatably to define a space or chamber 10 for receiving an end of pipe between the inner tubular member 4 and the outer tubular member 5.

When the outer tubular member 5 is mounted around the inner tubular member 4 rotatably, a bending or rotating force applied to the pipe during or after insertion may be relieved to compensate for destructing stresses. When the outer tubular member 5 is mounted around the inner tubular member 4 non-rotatably by interference fit, the pipe coupling 1 may be made rigid entirely.

The distal end 52 of the outer tubular member 5 slightly extends beyond the distal end 43 of the inner tubular member 4. As a result, the inner tubular member 4 is protected from outer impact. If the pipe coupling is damaged for some reason, the damaged portion is restricted to the outer tubular member 5 allowing to repair or exchange the outer tubular member 5. The above structure is also effective to relieve a force applied to tilt the distal end of inner tubular member 4 relative to the center axis for protecting the inner tubular member 4 from damaging.

Within the space 10 for receiving the pipe, an inner lock ring 6 and an outer lock ring 7 each having a plurality of first pawls for urging or fastening the inserted pipe and a plurality of second pawls for locking the inserted pipe from withdrawing are disposed axially movably. However, the lock ring does not need to be disposed on both of the outer surface 40 of the inner tubular member 4 and the inner surface 50 of the outer tubular member 5. It is sufficient that either one of inner tubular member 4 or outer tubular member 5 is provided with the lock ring. However, it is preferable to provide both of the inner and outer tubular members 4 and 5 with the lock ring when considering possible failure of the lock ring for some reason.

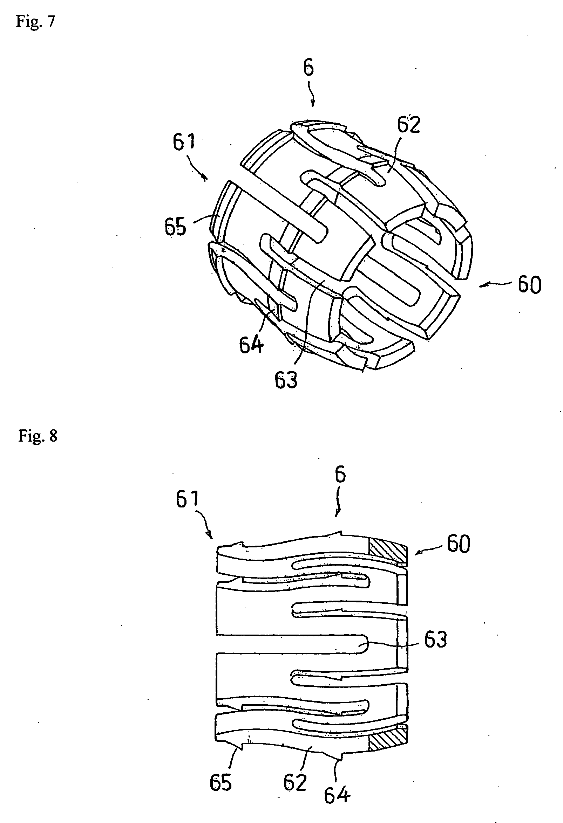

As illustrated in Figs. 3 and 4, the outer surface 40 of the inner tubular member 4 is provided with a radially extending terminal wall 44 and an inclined annular wall 45 for progressively enlarging the diameter of the inner tubular member 4 axially outwardly. The inner lock ring 6 shown in Figs. 7 and 8 is mounted on the outer surface 40 of the inner tubular member 4 between the terminal wall 44 and the inclined annular wall 45 and is axially movable therebetween. The axial movement of the inner lock ring 6 is restricted in one direction by the abutment of its stop end 60 with the terminal wall 44. The axial movement of the inner lock ring 6 in the outer direction is allowed until its free end 61 lies over the inclined annular wall 45. The free end 61 of the inner lock ring 6 is, therefore, positioned axially outwardly relative to the stop end 60 thereof and provided there with a plurality of radially outwardly protruding second pawls 65.

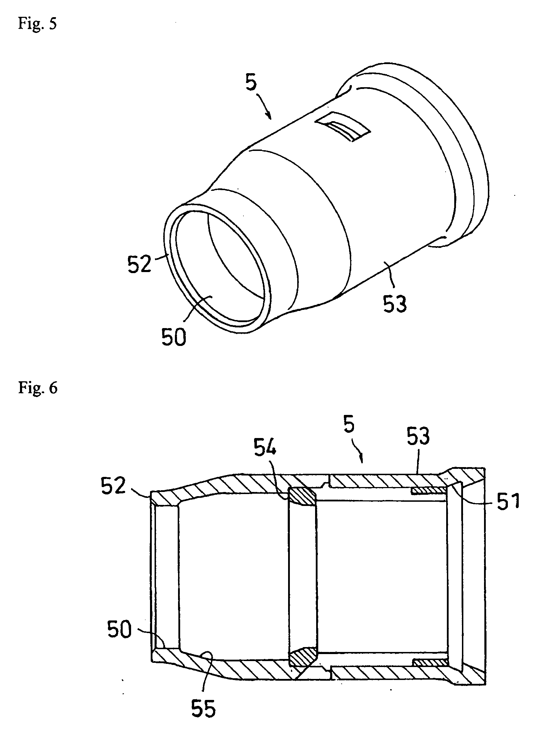

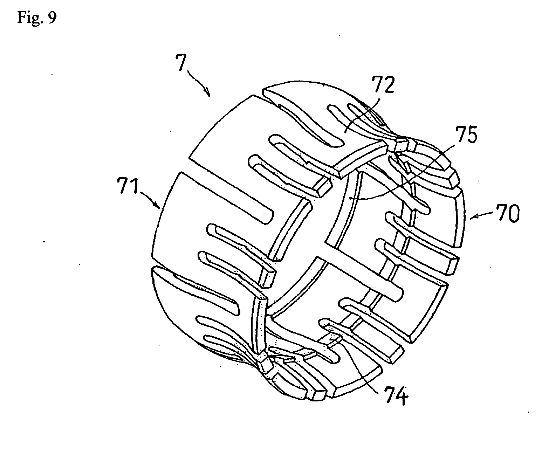

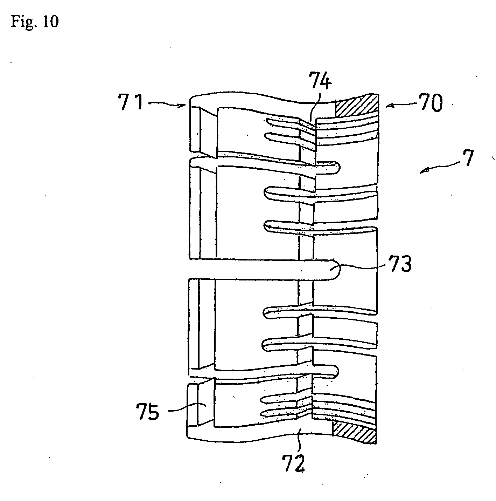

The inner surface 50 of the outer tubular member 5 is provided, as illustrated in Figs. 5 and 6, with a radially extending terminal wall 54 and an inclined annular wall 55 for progressively decreasing the diameter of the outer tubular member 5 axially outwardly. The outer lock ring 7 shown in Figs. 9 and 10 is mounted on the inner surface 50 of the outer tubular member 5 between the terminal wall 54 and the inclined annular wall 55 and is axially movable therebetween. A reinforcing rib (not shown) may be provided on the outer surface 53 of the outer tubular member 5. The axial movement of the outer lock ring 7 is restricted in one direction by the abutment of its stop end 70 with the terminal wall 54. The axial movement of the outer lock ring 7 in the other direction is allowed until its free end 71 lies over the inclined annular wall 55. The free end 71 of the outer lock ring 7 is, therefore, positioned axially outwardly relative to the stop end 70 thereof and provided there with a plurality of radially inwardly protruding second pawls 75.

Figs. 7 and 8 show the inner lock ring 6 of the pipe coupling 1 in perspective view and cross-sectional view taken along the center axis respectively.

The inner lock ring 6 mounted on the outer surface 40 of the inner tubular member 4 is of generally tubular or barrel shape. A plurality of axially extending slits 63 are cut at one end to separate the inner lock ring 6 into a plurality of cantilever strips each having a free end 61. The inner lock ring 6 comprises a plurality of radially outwardly protruding first pawls 64 to be elastically deformed and urged against the inner surface of a pipe upon insertion into the pipe coupling 1 and a plurality of outwardly protruding second pawls 65 at the free end of each cantilever strip for locking the pipe from withdrawing.

The first pawls 64 are elastically deformable by fabricating the inner lock ring 6 itself from an elastically deformable material. The function of first pawls 64 for applying pressure against the inner surface of inserted pipe is accomplished by providing the inner lock ring 6 with a radially outwardly bulged portion 62 in the middle. The bulged portion 62 is deformed radially inwardly when pressed radially inwardly and applies a pressure against the inner surface 80 of the inserted pipe 8 by a rebounding force. Since a plurality of slits 63 extend axially beyond the bulged portion 62, the separated cantilever strips are easily deformed in the bulged portion 62 without interfering one another. The outwardly protruding first pawls 64 are positioned axially inwardly relative to the outwardly protruding second pawls 65 for maximizing the pressure applied on the inner surface 80 of inserted pipe 8.

The first and the second pawls 64 and 65 carried by the inner lock ring 6 may have any shape or contour provided that the connected pipe is firmly locked and prevented from withdrawing. Usually, they comprise one or more protrusions of dent shape or cone shape. In the illustrated embodiment, a plurality of outwardly protruding pawls 64 and 65 have an inclined surface on the pipe insertion side and a generally vertical surface on the opposite side.

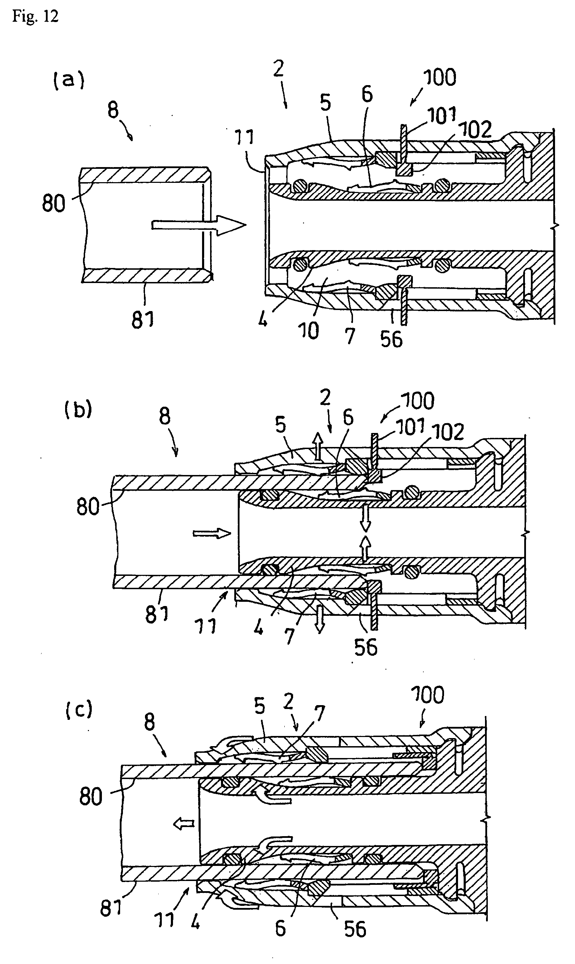

As a result, when a pipe 8 is inserted into the pipe-receiving space 10 in place as shown in Fig. 12(c) and then moved in the direction of arrow, a plurality of outwardly protruding first pawls 64 are urged on the inner surface 80 of pipe 8 to fasten the pipe 8 whereupon the inner lock ring 6 is moved together with pipe 8 in the same direction. At the same time, the free end 61 of the inner lock ring 6 is advanced over the inclined wall 45. The inner lock ring 6 is forcibly deformed there by the interaction with the inclined wall 45 to increase its diameter and urge a plurality of radially outwardly protruding second pawls 65 against the inner surface 80 of the pipe 8.

A plurality of outwardly protruding first pawls 64 are, therefore, carried by the inner lock ring 6 at the bulged portion 62 to apply a pressure on the inner surface 80 of the inserted pipe 8, while a plurality of outwardly protruding second pawls 65 are carried at the free end 61 of the inner lock ring 6 such that the second pawls 65 are normally not contacted under pressure with the inner surface 80 of inserted pipe 8. Accordingly, the pipe 8 may easily be inserted into the pipe coupling 1 but steadily and firmly locked by the interaction between the second pawls 65 and the inclined wall 45 when the pipe 8 is pulled in a direction for withdrawing.

Since the inner lock ring 6 is necessarily moved with the inserted pipe 8 when the pipe 8 is move in a direction for withdrawing, it is not necessary to constantly bias the lock ring 6 toward the opening for inserting a pipe by a spring as in the prior art pipe coupling comprising a movable lock ring.

The outer lock ring 7 used in the pipe coupling 1 according to an embodiment of the present invention is shown in Figs. 9 and 10 in perspective view and a cross-sectional view taking along the center axis, respectively.

Similar to the inner lock ring 6, the outer lock ring 7 mounted on the inner surface 50 of the outer tubular member 5 is of generally tubular or cylindrical shape. A plurality of axially extending slits 73 are cut at one end to separate the outer lock ring 7 into a plurality of cantilever strips each having a free end 71. The outer lock ring 7 comprises a plurality of radially inwardly protruding first pawls 74 to be elastically deformed and urged against the outer surface of a pipe upon insertion into the pipe coupling 1 and a plurality of radially inwardly protruding second pawls 75 at the free end of each cantilever strip for locking the pipe from withdrawing.

The first pawls 74 are elastically deformable by fabricating the outer lock ring 7 itself from an elastically deformable material. The function of first pawls 74 for applying a pressure against the outer surface of inserted pipe is accomplished by providing the outer lock ring 7 with a radially inwardly shrinked portion 72 in the middle. The shrinked portion 72 is deformed radially outwardly when pressed radially outwardly and applies a pressure against the outer surface 81 of the inserted pipe 8 by a rebounding force. Since a plurality of slits 73 extend axially beyond the shrinked portion 72, the separated cantilever strips are easily deformed in the shrinked portion 72 without interfering one another. The inwardly protruding first pawls 74 are positioned axially inwardly relative to the inwardly protruding second pawls 75 for maximizing the pressure applied on the outer surface of inserted pipe 8.

The first and the second pawls 74 and 75 carried by the outer lock ring 7 may have any shape or contour provided that the connected pipe is firmly locked and prevented from withdrawing. Usually, they comprise one or more protrusions of dent shape or cone shape. In the illustrated embodiment, a plurality of inwardly protruding pawls 74 and 75 have an inclined surface on the pipe insertion side and a generally vertical surface on the opposite side.

As a result, when a pipe 8 is inserted into the pipe-receiving space 10 in place as shown in Fig. 12(c) and then moved in the direction of arrow, a plurality of inwardly protruding pawls 74 are urged on the outer surface 81 of pipe 8 to fasten the pipe 8 whereupon the outer lock ring 7 is moved together with pipe 8 in the same direction. At the same time, the free end 71 of the outer lock ring 7 is advanced over the inclined wall 55. The outer lock ring 7 is forcibily deformed there by the interaction with the inclined wall 55 to decrease its diameter and urge a plurality of radially inwardly protruding second pawls 75 against the outer surface 81 of the pipe 8.

A plurality of inwardly protruding first pawls 74 are, therefore, carried by the outer lock ring 7 at the shrinked portion 72 to apply a pressure on the outer surface 81 of the inserted pipe 8, while a plurality of inwardly protruding second pawls 75 are carried at the free end 71 of the outer lock ring 7 such that the second pawls 75 are not normally contacted under pressure with the outer surface 81 of inserted pipe 8. Accordingly, the pipe may easily be inserted into the pipe coupling 1 but steadily and firmly locked by the interaction between the second pawls 75 and the inclined wall 55 when the pipe 8 is pulled in a direction for withdrawing.

Since the outer lock ring 7 is necessarily moved with the inserted pipe 8 when the pipe 8 is moved in a direction for withdrawing, it is not necessary to constantly bias the lock ring 7 toward the opening for inserting a pipe by a spring as in the prior art pipe coupling comprising a movable lock ring.

In cases where a pipe coupling for detachably connecting one or more pipes is desired, it is necessary to detachably connect the outer tubular member 5 around the inner tubular member 4. The inserted pipe may be removed by disconnecting the outer tubular member from the inner tubular member and releasing the pipe from the outer lock ring.

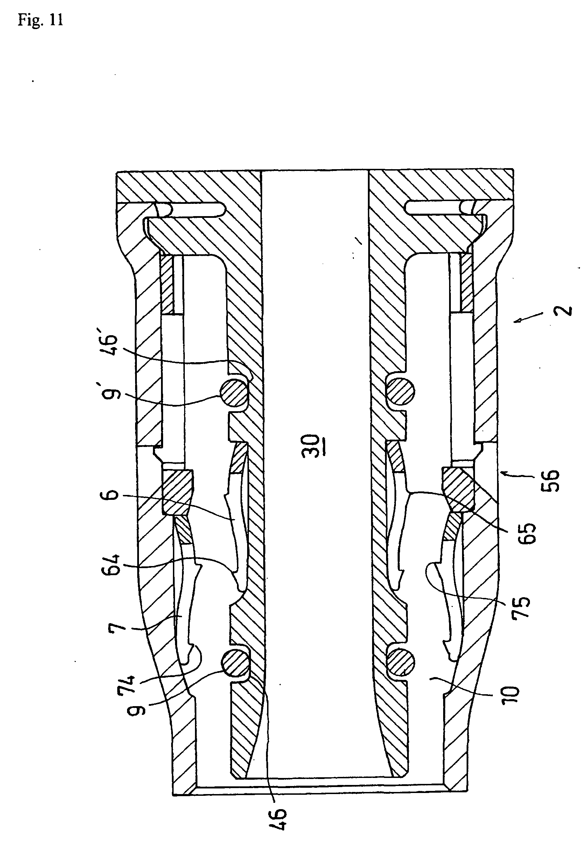

As shown in Fig. 11, the inner lock ring 6 has an outwardly bulged portion 62 of which free end 61 is spaced apart from the inclined wall 45 before insertion of pipe 8. Similarly, the outer lock ring 7 has an inwardly shrinked portion 72 of which free end 71 is spaced apart from the inclined wall 55 before insertion of pipe 8. Accordingly, the second pawls 65 of the inner lock ring 6 and the second pawls 75 of the outer lock ring are each retracted radially inwardly or outwardly to a position where the second pawls 65 or 75 do not essentially abut on the inner or outer surface of the pipe 8.

The inner and outer surfaces 80 and 81 of a pipe 8 to be inserted are thus kept substantially free of injury when the pipe 8 is inserted. In the prior art pipe couplings comprising a movable or unmovable lock rings, the inner or outer surface of pipe is often injured by the pawls when the pipe is inserted. Moreover, the locking effect and the sealing effect by the inner lock ring 6 or outer lock ring 7 of the illustrated pipe coupling 1 are further improved by the use of one or more seal rings as will be discussed below.

In the illustrated embodiment, a plurality of radially outwardly protruding first pawls 64 carried by the inner lock ring 6 and a plurality of radially inwardly protruding first pawls 74 carried by the outer lock ring 7 are located one another in axially displaced positions. Similarly, a plurality of radially outwardly protruding second pawls 65 carried by the inner lock ring 6 and a plurality of radially inwardly protruding second pawls 75 carried by the outer lock ring are located one another in axially displaced positions. See, Fig. 11 and Fig. 12 (b)(c).

When both of the first pawls 64 and the first pawls 74 are located one another in axially displaced positions, the pipe may be inserted into the coupling with decreased resistance because both of the first pawls 64 and 74 are urged against the inner surface 80 and the outer surface 81 of the pipe 8 successively. Also in the illustrated embodiment, the first pawls 64 on the inner lock ring 6 are located at a position where the distance of bulged portion 62 is maximum from the center axis of the inner lock ring 6. Similarly, the first pawls 74 on the outer lock ring 7 are located at a position where the distance of shrinked portion 72 is minimum from the center axis of the outer lock ring 7. The location of the first pawls 64 of the inner lock ring 6 and the first pawls 74 of the outer lock ring 7 in this manner allows both of first pawls 64 and 74 to deform to the fullest extent radially inwardly or radially outwardly without increasing the resistance of the pawls 64 and 74 when pipe 8 is inserted.

In the illustrated embodiment, the second pawls 65 and 75 are also located one another at axially displaced positions. The location of second pawls 65 and 75 in this manner allows a seal ring or like sealing member to be disposed on the inner lock ring 6 at a position opposite to the second pawls 74 of the outer lock ring 7 for enhancing the sealing effect.

The lock rings 6 and 7 for accomplishing the above functions are fabricated from a rigid material having a suitable degree of elasticity such as metals or plastics. When a plastic material is chosen, so-called engineering plastics such as polyphenylene sulfone (PPSU) or polyphenylene sulfide (PPS) are preferred.

In the illustrated embodiment, the pipe coupling 1 comprises a pair of seal rings 9 and 9' on the outer surface 40 of the inner tubular member 4 to hermetically seal the gap between the inserted pipe 8 and the outer surface 40 of the inner tubular member 4. The seal rings 9 and 9' are secured in a pair of annular grooves 46 and 46' formed on the outer surface 40 of the inner tubular member 4. The cross-sectional shape or contour of the seal rings is circular in this embodiment.

One or more seal rings may be provided on the outer surface 40 of the inner tubular member 4 or on the inner surface 50 of the outer tubular member 5 or on both surfaces. In the illustrated embodiment, a pair of seal rings 9 and 9' are disposed on the outer surface 40 of the inner tubular member 4 to effectively prevent dust or other foreign matters from entering the interior of connected pipe. The seal rings 9 and 9' are also effective to prevent the exposed end of three layered aluminum pipe from corrosion.

Two or more seal rings may be provided on the outer surface 40 of the inner tubular member 4. In this case, however, at least one seal ring is located at a position spaced apart from the second pawls 65 axially outwardly to contact with the intact inner surface 80 the connected pipe 8 for obtaining a high sealing effect.

The seal ring 9 is located at a position opposite to the second pawls 75 of the outer lock ring 7. This location of the seal ring 9 enhances the sealing effect with the aid of fastening force of the second pawls 75 of the outer lock ring 7. In the illustrated embodiment, seal ring 9 is located at a position spaced apart from the second pawls 65 of the inner lock ring 6 axially outwardly to avoid damages. The second pawls 65 of the inner lock ring 6 is preferably located at a position spaced apart from the second pawls 75 of the outer lock ring 7 axially inwardly. The seal rings 9 and 9' are spaced apart one another so that the inner lock ring 6 may be disposed between them.

When more than one seal rings 9 and 9' are disposed on the same surface, it is preferably to dispose two seal rings 9 and 9' on both sides of the lock ring 6, one axially inwardly and the other axially outwardly.

Although not shown in the drawings, the inner lock ring 6 and the outer lock ring 7 may be located in radially aligned positions one another so that the second pawls 65 of the inner lock ring 6 are located at a diametrically opposed position to the second pawls 75 of the outer lock ring 7 whereupon the inserted pipe is fastened between the inner lock ring 6 and the outer lock ring very firmly.

As shown in Fig. 12, the outer tubular member 5 of the pipe coupling 1 is provided with an opening 56 for visually confirming that the pipe 8 has been received in the space or chamber 10 for the inserted pipe in place. The opening 56 extends radially through the outer tubular member 5 at a position displaced from the outer lock ring 7 axially inwardly. In order to facilitate the confirmation, a C-shaped or O-shaped ring 102 carrying a radially outwarding extended rod 101 may be used as a confirmation means 100. The ring 102 is received in the space 10 for the pipe with the rod projecting to the exterior through the opening 56. The ring 102 is pushed inwardly with the distal end of pipe and the rod 101 is withdrawn entirely within the space 10 to indicate that the pipe has been inserted in place.

Although not shown in the drawings, the pipe coupling may comprises a profiled ring having an annular groove for receiving the distal end of pipe on one side and a rounded surface on the other side. The profiled ring is received in the space 10 for the pipe with the side having annular groove facing the opening for inserting a pipe.

When a pipe is inserted in the space 10 for the pipe, the distal end of the pipe is engaged in the annular groove to protect the inner and outer lock rings 6, 7 from being damaged by a sharp or unchamfered edge of the pipe. The profiled ring is preferably fabricated from a lubricating plastic such as nylon.

Fig. 12 shows schematically the process for connecting a pipe into the pipe coupling 1 described above, wherein (a) shows a pipe 8 before insertion, (b) shows the pipe being in a process of insertion wherein the pipe abuts on both of the first pawl 64 of inner lock ring 6 at the bulged portion and the first pawl 74 of outer lock ring at the shrinked portion, and (c) shows the state of the pipe after insertion and fastening have been completed.

As shown in Fig. 12 (a) and (b), the pipe 8 is inserted into the space 10 in the pipe coupling through the pipe-insertion opening 11. The pipe 8 is advanced while pushing away the first pawls 64 located at the budged portion 62 of the inner lock ring 6 and the first pawls 74 located at the shrinked portion 72 of the outer lock ring 7 until its distal end abut the insertion confirmation means 100.

The pipe is further advanced into the receiving space 10 to the fullest extent as shown in Fig. 12 (c). The pipe 8 is then fastened between the inner lock ring 6 and the outer lock ring 7 by the engagement of a plurality of first pawls 64 carried by the inner lock ring 6 at the bulged portion 62 with the inner surface 80 of the pipe 8 and the engagement of a plurality of first pawls 74 carried by the outer lock ring 7 at the shrinked portion 72 with the outer surface 81 of the pipe. When the pipe 8 is moved toward the pipe-insertion inlet opening 11 by pulling, the inner lock ring 6 and the outer lock ring 7 are moved in the same direction to follow the movement of pipe 8. The free end 61 of the inner lock ring 6 is then overlaid on the inclined wall 45 of the inner tubular member and the inner lock ring 6 is expanded radially outwardly at its free end to urge the second pawls 65 against the inner surface 80 of pipe 8 by the interaction with the inclined wall 45. Similarly, the free end 71 of the outer lock ring 7 is overlaid on the inclined wall 55 of the outer tubular member 5 and the outer lock ring is depressed radially inwardly at its free end to urge the second pawls 75 against the outer surface 81 of pipe 8 by the interaction with the inclined wall 55.

As a consequence, the pipe 8 may be inserted into the pipe coupling 1 with remarkably decreased resistance exerted by the first pawls 64 of the inner lock ring 6 and the first pawls 74 of the outer lock ring 7. When pulling back in the withdrawing direction the pipe 8 is locked steadily and firmly by the interaction of the second pawls 65 and 75 with respective inclined walls.

When the pipe 8 is advanced into the receiving space 10 to the fullest extent, the ring member 102 of the confirmation device 100 is pushed forward by the abutting pipe end in the receiving space 10 to the fullest extent. The rod member 101 is then retracted from its projected position into the inside the pipe-receiving space 10 to provide the operator with visual confirmation that the pipe has been inserted into the receiving space 10 and the connection has been completed.

### List of Reference Numerals

- 1 :: pipe coupling
- 2 :: socket
- 3 :: main body
- 30 :: passage opening
- 31 :: distal end of a passage
- 4 :: inner tubular member
- 40 :: outer surface of an inner tubular member
- 41 :: flange
- 42 :: annular edge of an inner tubular member
- 43 :: distal end of an inner tubular member
- 44 :: terminal wall of an inner tubular member
- 45 :: inclined annular wall of an inner tubular member
- 46, 46' :: an annular groove
- 5 :: outer tubular member
- 50 :: inner surface of an outer tubular member
- 51 :: an annular groove
- 52 :: distal end of an outer tubular member
- 53 :: outer surface of an outer tubular member
- 54 :: terminal wall of an outer tubular member
- 55 :: inclined annular wall of an outer tubular member
- 56 :: bore
- 6 :: inner lock ring
- 60 :: stop end of an inner lock ring
- 61 :: free end of an inner lock ring
- 62 :: a radially outwardly bulged portion
- 63 :: slits of an inner lock ring
- 64 :: outwardly protruding first pawls
- 65 :: outwardly protruding second pawls
- 7 :: outer lock ring
- 70 :: stop end of an outer lock ring
- 71 :: free end of an outer lock ring
- 72 :: a radially inwardly shrinked portion
- 73 :: slits of an outer lock ring
- 74 :: inwardly protruding first pawls
- 75 :: inwardly protruding second pawls
- 8 :: pipe
- 80 :: inner surface of a pipe
- 81 :: outer surface of a pipe
- 9, 9' :: seal ring
- 10 :: receiving space
- 11 :: pipe-insertion inlet opening
- 100 :: confirmation device
- 101 :: rod member of a confirmation device
- 102 :: ring member of a confirmation device

## Claims

1. A pipe coupling (1) comprising:
a main body (3);
an inner tubular member (4) extending from the main body in axially outer direction and having a radially outwardly extending terminal wall (44) and a tapered annular wall (45) inclining outwardly in axially outer direction;
an outer tubular member (5) surrounding the inner tubular member, the inner and outer tubular members defining a space (10) for receiving an end of pipe therebetween; and
a tubular inner lock ring (6) having a plurality of cantilever strips each having a free end (61) separated by a plurality of axially extending slits (63), the inner lock ring carrying a plurality of radially outwardly protruding first pawls (64) for applying a pressure against the inner surface of said pipe upon elastic deformation of the inner lock ring (6) and a plurality of radially outwardly protruding second pawls (65) at said free end for locking said pipe when withdrawing the pipe, said inner lock ring (6) being movable in said space (10) for receiving the pipe between said terminal wall (44) and said tapered annular wall (45); wherein, when said pipe is inserted in said space (10) for receiving the pipe in place and then moved in a direction for withdrawing the pipe, said inner lock ring (6) is moved together with the pipe in the same direction as a consequence of the engagement of said outwardly protruding first pawls (64) with the inner surface of said pipe, and the free end of said inner lock ring (6) overlies on said tapered annular wall area whereby said inner lock ring is expanded radially outwardly to urge said outwardly protruding second pawls against the inner surface of said pipe.

2. A pipe coupling (1) comprising:
a main body (3);
an inner tubular member (4) extending from the main body in axially outer direction;
an outer tubular member (5) surrounding the inner tubular member and having a radially inwardly extending terminal wall (54) and a tapered annular wall (55) inclining inwardly in axially outer direction, the inner and outer tubular members defining a space(10) for receiving an end of pipe therebetween; and
a tubular outer lock ring (7) having a plurality of cantilever strips each having a free end (71) separated by a plurality of axially extending slits(73), the outer lock ring (7) carrying a plurality of radially inwardly protruding first pawls (74) for applying a pressure against the outer surface of said pipe upon elastic deformation of the outer lock ring and a plurality of radially inwardly protruding second pawls (75) at said free end for locking said pipe when withdrawing the pipe, said outer lock ring (7) being movable in said space (10) for receiving the pipe between said terminal wall (54) and said tapered annular wall (55); wherein, when said pipe is inserted in said space (10) for receiving the pipe in place and then moved in a direction for withdrawing the pipe, said outer lock ring (7) is moved together with the pipe in the same direction as a consequence of the engagement of said inwardly protruding first pawls (74) with the outer surface of said pipe, and the free end of said outer lock ring overlies on said tapered annular wall area whereby said outer lock ring (7) is shrinked radially inwardly to urge said inwardly protruding second pawls (75) against the outer surface of said pipe.

3. A pipe coupling (1) comprising:
a main body (3);
an inner tubular member (4) extending from the main body in axially outer direction and having a radially outwardly extending terminal wall (44) and a tapered annular wall (45) inclining outwardly in axially outer direction;
an outer tubular member (5) surrounding the inner tubular member (4) and having radially inwardly extending terminal wall (54) and a tapered annular wall (55) inclining inwardly in axially outer direction, the inner and outer tubular members defining a space (10) for receiving an end of pipe therebetween;
a tubular inner lock ring (6) having a plurality of cantilever strips each having a free end (61) separated by a plurality of axially extending slits (63), the inner lock ring (7) carrying a plurality of radially outwardly protruding first pawls (64) for applying a pressure against the inner surface of said pipe upon elastic deformation of the inner lock ring and a plurality of radially outwardly protruding second pawls (65) at said free end for locking said pipe when withdrawing the pipe, said inner lock ring (6) being movable in said space for receiving the pipe between said terminal wall (54) and said tapered annular wall (55); and
a tubular outer lock ring (7) having a plurality of cantilever strips each having a free end (71) separated by a plurality of axially extending slits (73), the outer lock ring carrying a plurality of radially inwardly protruding first pawls (74) for applying a pressure against the outer surface of said pipe upon elastic deformation of the outer lock ring and a plurality of radially inwardly protruding second pawls (75) at said free end for locking said pipe when withdrawing the pipe, said outer lock ring (7) being movable in said space (10) for receiving the pipe between said terminal wall (54) and said tapered annular wall (55);
wherein, when said pipe is inserted in said space (10) for receiving the pipe in place and then moved in a direction for withdrawing the pipe, said inner lock ring (6) is moved together with the pipe in the same direction as a consequence of the engagement of said outwardly protruding first pawls (64) with the inner surface of said pipe, and the free end of said inner lock ring (6) overlies on said tapered annular wall area whereby said inner lock ring (6) is expanded radially outwardly to urge said outwardly protruding second pawls (65) against the inner surface of said pipe; and said outer lock ring (7) is moved together with the pipe in the same direction as a consequence of the engagement of said inwardly protruding first pawls (74) with the outer surface of said pipe, and the free end of said outer lock ring (7) overlies on said tapered annular wall area whereby said outer lock ring is shrinked radially inwardly to urge said inwardly protruding second pawls (75) against the outer surface of said pipe.

4. A pipe coupling according to one of claims 1 to 3 wherein said inner lock ring (6) comprises a radially outwardly bulged portion (62) in the middle area, and wherein said outer lock ring (7) comprises a radially inwardly shrinked portion (72) in the middle area.

5. A pipe coupling according to one of claims 1 to 3 wherein said first pawls (64, 74) are located at an axially inward position relative to said second pawls (74, 75).

6. A pipe coupling according to claim 3 wherein said outwardly protruding first pawls (64) are located at an axially non-aligned position relative to said inwardly protruding first pawls (74) and wherein said outwardly protruding second pawls (65) are located at an axially non-aligned position relative to said inwardly protruding second pawls (75).

7. A pipe coupling according to one of claims 1 to 3 wherein at least one seal ring (9, 9') is disposed on the outer surface (40) of said inner tubular member (4) at a radially aligned position relative to said inwardly protruding second pawls (75) to seal the gap between said inner tubular member (4) and the pipe, or wherein at least one seal ring (9, 9') is disposed on the inner surface (50) of said outer tubular member (5) at a radially aligned position relative to said outwardly protruding second pawls (65) to seal the gap between said outer tubular member (5) and the pipe.

8. A pipe coupling according to one of claims 1 to 3 wherein tubular lock ring (6,7) is fabricated from polyphenylene sulfone or polyphenylene sulfide or a metal.

9. A pipe coupling according to one of claims 1 to 3 wherein said outer tubular member (5) comprises at least one opening (56) radially extending therethrough for visually confirming directly or indirectly with the aid of a confirmation device (100) that a pipe has been inserted in place into said space for receiving the pipe.

10. A pipe coupling according to one of claims 1 to 3 wherein said main body (3) and said inner tubular member (4) are integrally molded in one piece.

## Patentansprüche

1. Rohrkupplung (1) mit:
einem Hauptkörper (3);
einem inneren Röhrenteil (4), das sich vom Hauptkörper axial nach außen erstreckt und eine sich radial nach außen erstreckende Stirnwand (44) und eine sich verjüngende ringförmige Wand (45) aufweist, die in axialer, nach außen weisender Richtung nach außen geneigt ist;
einem äußeren Röhrenteil (5), welches das innere Röhrenteil umgibt, wobei das innere und das äußere Röhrenteil zwischen sich einen Raum (10) zur Aufnahme eines Röhrenendes definieren; und
einem röhrenförmigen inneren Sicherungsring (6), der zahlreiche freitragende Streifen mit jeweils einem freien Ende (61) aufweist, die durch zahlreiche axial verlaufende Schlitze (63) voneinander getrennt sind, wobei der innere Sicherungsring zahlreiche radial nach außen vorspringende erste Klauen (64) trägt, um Druck gegen die Innenfläche des Rohrs bei elastischer Verformung des inneren Sicherungsrings (6) auszuüben, und zahlreiche radial nach außen vorspringende zweite Klauen (65) an dem freien Ende aufweist, um das Rohr zu sperren, wenn das Rohr herausgezogen wird, wobei der innere Sicherungsring (6) in dem Raum (10) zur Aufnahme des Rohrs zwischen der Stirnwand (44) und der sich verjüngenden Ringwand (45) beweglich ist;
wobei, wenn das Rohr in den Raum (10) zur Aufnahme des Rohrs eingesetzt und dann in eine Richtung zum Herausziehen des Rohrs bewegt wird, der innere Sicherungsring (6) aufgrund des Eingreifens der nach außen vorspringenden ersten Klauen (64) in die Innenfläche des Rohrs zusammen mit dem Rohr in die gleiche Richtung bewegt wird, und das freie Ende des inneren Sicherungsrings (6) auf dem Bereich der sich verjüngenden Ringwand aufliegt, wobei der innere Sicherungsring radial nach außen ausgedehnt wird, um die nach außen vorspringenden zweiten Klauen gegen die Innenfläche des Rohrs zu drücken.

2. Rohrkupplung (1) mit:
einem Hauptkörper (3);
einem inneren Röhrenteil (4), das sich vom Hauptkörper axial nach außen erstreckt;
einem äußeren Röhrenteil (5), welches das innere Röhrenteil umgibt und eine sich radial nach innen erstreckende Stirnwand (54) und eine sich verjüngende ringförmige Wand (55) aufweist, die in axialer, nach außen weisender Richtung nach innen geneigt ist, wobei das innere und das äußere Röhrenteil zwischen sich einen Raum (10) zur Aufnahme eines Röhrenendes definieren; und
einem röhrenförmigen äußeren Sicherungsring (7), der zahlreiche freitragende Streifen mit jeweils einem freien Ende (71) aufweist, die durch zahlreiche axial verlaufende Schlitze (73) voneinander getrennt sind, wobei der äußere Sicherungsring (7) zahlreiche radial nach innen vorspringende erste Klauen (74) trägt, um Druck gegen die Außenfläche des Rohrs bei elastischer Verformung des äußeren Sicherungsrings auszuüben, und zahlreiche radial nach innen vorspringende zweite Klauen (75) an dem freien Ende aufweist, um das Rohr zu sperren, wenn das Rohr herausgezogen wird, wobei der äußere Sicherungsring (7) in dem Raum (10) zur Aufnahme des Rohrs zwischen der Stirnwand (54) und der sich verjüngenden Ringwand (55) beweglich ist;
wobei, wenn das Rohr in den Raum (10) zur Aufnahme des Rohrs eingesetzt und dann in eine Richtung zum Herausziehen des Rohrs bewegt wird, der äußere Sicherungsring (7) aufgrund des Eingreifens der nach innen vorspringenden ersten Klauen (74) in die Außenfläche des Rohrs zusammen mit dem Rohr in die gleiche Richtung bewegt wird, und das freie Ende des äußeren Sicherungsrings (7) auf dem Bereich der sich verjüngenden Ringwand aufliegt, wobei der äußere Sicherungsring (7) radial nach innen zusammengezogen wird, um die nach innen vorspringenden zweiten Klauen (75) gegen die Außenfläche des Rohrs zu drücken.

3. Rohrkupplung (1) mit:
einem Hauptkörper (3);
einem inneren Röhrenteil (4), das sich vom Hauptkörper axial nach außen erstreckt und eine sich radial nach außen erstreckende Stirnwand (44) und eine sich verjüngende ringförmige Wand (45) aufweist, die in axialer, nach außen weisender Richtung nach außen geneigt ist;
einem äußeren Röhrenteil (5), welches das innere Röhrenteil (4) umgibt und eine sich radial nach innen erstreckende Stirnwand (54) und eine sich verjüngende ringförmige Wand (55) aufweist, die in axialer, nach außen weisender Richtung nach innen geneigt ist, wobei das innere und das äußere Röhrenteil zwischen sich einen Raum (10) zur Aufnahme eines Röhrenendes definieren; und
einen röhrenförmigen inneren Sicherungsring (6), der zahlreiche freitragende Streifen mit jeweils einem freien Ende (61) aufweist, die durch zahlreiche axial verlaufende Schlitze (63) voneinander getrennt sind, wobei der innere Sicherungsring (6) zahlreiche radial nach außen vorspringende erste Klauen (64) trägt, um Druck gegen die Innenfläche des Rohrs bei elastischer Verformung des inneren Sicherungsrings auszuüben, und zahlreiche radial nach außen vorspringende zweite Klauen (65) an dem freien Ende aufweist, um das Rohr zu sperren, wenn das Rohr herausgezogen wird, wobei der innere Sicherungsring (6) in dem Raum zur Aufnahme des Rohrs zwischen der Stirnwand (54) und der sich verjüngenden Ringwand (55) beweglich ist;
einem röhrenförmigen äußeren Sicherungsring (7), der zahlreiche freitragende Streifen mit jeweils einem freien Ende (71) aufweist, die durch zahlreiche axial verlaufende Schlitze (73) voneinander getrennt sind, wobei der äußere Sicherungsring zahlreiche radial nach innen vorspringende erste Klauen (74) trägt, um Druck gegen die Außenfläche des Rohrs bei elastischer Verformung des äußeren Sicherungsrings auszuüben, und zahlreiche radial nach innen vorspringende zweite Klauen (75) an dem freien Ende aufweist, um das Rohr zu sperren, wenn das Rohr herausgezogen wird, wobei der äußere Sicherungsring (7) in dem Raum (10) zur Aufnahme des Rohrs zwischen der Stirnwand (54) und der sich verjüngenden Ringwand (55) beweglich ist;
wobei, wenn das Rohr in den Raum (10) zur Aufnahme des Rohrs eingesetzt und dann in eine Richtung zum Herausziehen des Rohrs bewegt wird, der innere Sicherungsring (6) aufgrund des Eingreifens der nach außen vorspringenden ersten Klauen (64) in die Innenfläche des Rohrs zusammen mit dem Rohr in die gleiche Richtung bewegt wird, und das freie Ende des inneren Sicherungsrings (6) auf dem Bereich der sich verjüngenden Ringwand aufliegt, wobei der innere Sicherungsring radial nach außen ausgedehnt wird, um die nach außen vorspringenden zweiten Klauen (65) gegen die Innenfläche des Rohrs zu drücken; und der äußere Sicherungsring (7) aufgrund des Eingreifens der nach innen vorspringenden ersten Klauen (74) in die Außenfläche des Rohrs zusammen mit dem Rohr in die gleiche Richtung bewegt wird, und das freie Ende des äußeren Sicherungsrings (7) auf dem Bereich der sich verjüngenden Ringwand aufliegt, wobei der äußere Sicherungsring (7) radial nach innen zusammengezogen wird, um die nach innen vorspringenden zweiten Klauen (75) gegen die Außenfläche des Rohrs zu drücken.

4. Rohrkupplung gemäß einem der Ansprüche 1 bis 3, wobei der innere Sicherungsring (6) im mittleren Bereich einen radial nach außen gewölbte Abschnitt (62) umfasst, und wobei der äußere Sicherungsring (7) im mittleren Bereich einen radial nach innen zusammengezogenen Abschnitt umfasst.

5. Rohrkupplung gemäß einem der Ansprüche 1 bis 3, wobei die ersten Klauen (64, 74) bezogen auf die zweiten Klauen (74, 75) an einer axial inneren Position angeordnet sind.

6. Rohrkupplung gemäß Anspruch 3, wobei die nach außen vorspringenden ersten Klauen (64) an einer axial nicht fluchtenden Position bezüglich der nach innen vorspringenden ersten Klauen (74) angeordnet sind und wobei die nach außen vorspringenden zweiten Klauen (65) an einer axial nicht fluchtenden Position bezüglich der nach innen vorspringenden zweiten Klauen (75) angeordnet sind.

7. Rohrkupplung gemäß einem der Ansprüche 1 bis 3, wobei mindestens ein Dichtungsring (9, 9') an der Außenfläche (40) des inneren Röhrenteils (4) an einer radial ausgerichteten Position bezüglich der nach innen vorspringenden zweiten Klauen (75) angeordnet ist, um den Spalt zwischen dem inneren Röhrenteil (4) und dem Rohr abzudichten, oder wobei mindestens ein Dichtungsring (9, 9') an der Innenfläche (50) des äußeren Röhrenteils (5) an einer radial ausgerichteten Position bezüglich der nach außen vorspringenden zweiten Klauen (65) angeordnet ist, um den Spalt zwischen dem äußeren Röhrenteil (5) und dem Rohr abzudichten.

8. Rohrkupplung gemäß einem der Ansprüche 1 bis 3, wobei der röhrenförmige Sicherungsrings (6, 7) aus Polyphenylensulfon oder Polyphenylensulfid oder einem Metall hergestellt ist.

9. Rohrkupplung gemäß einem der Ansprüche 1 bis 3, wobei das äußere Röhrenteil (5) mindestens eine radial durchgehende Öffnung (56) umfasst, um visuellen direkt oder indirekt mit Hilfe einer Bestätigungseinrichtung (100) zu bestätigen, dass ein Rohr den Raum zur Aufnahme des Rohr eingesetzt wurde.

10. Rohrkupplung gemäß einem der Ansprüche 1 bis 3, wobei der Hauptkörper (3) und das innere Röhrenteil (4) integral in einem Stück geformt sind.

## Revendications

1. Raccord de tuyaux (1) comprenant :
un corps principal (3) ;
un élément tubulaire interne (4) s'étendant à partir du corps principal dans la direction axialement externe et ayant une paroi terminale (44) s'étendant radialement vers l'extérieur et une paroi annulaire (45) progressivement rétrécie s'inclinant vers l'extérieur dans la direction axialement externe ;
un élément tubulaire externe (5) entourant l'élément tubulaire interne, les éléments tubulaires interne et externe définissant un espace (10) pour recevoir une extrémité de tuyau entre eux ; et
une bague de retenue interne tubulaire (6) ayant une pluralité de bandes en porte-à-faux ayant chacune une extrémité libre (61) séparée par une pluralité de fentes (63) s'étendant de manière axiale, la bague de retenue interne portant une pluralité de premiers cliquets (64) faisant saillie radialement vers l'extérieur pour appliquer une pression contre la surface interne dudit tuyau suite à la déformation élastique de la bague de retenue interne (6) et une pluralité de seconds cliquets (65) faisant saillie radialement vers l'extérieur au niveau de ladite extrémité libre pour bloquer ledit tuyau lors du retrait du tuyau, ladite bague de retenue interne (6) étant mobile dans ledit espace (10) pour recevoir le tuyau entre ladite paroi terminale (44) et ladite paroi annulaire progressivement rétrécie (45) ;
dans lequel, lorsque ledit tuyau est inséré dans ledit espace (10) pour recevoir le tuyau en place et ensuite déplacé dans la direction pour le retrait du tuyau, ladite bague de retenue interne (6) est déplacée conjointement avec le tuyau dans la même direction, à la suite de la mise en prise desdits premiers cliquets (64) faisant saillie vers l'extérieur avec la surface interne dudit tuyau, et l'extrémité libre de ladite bague de retenue interne (6) recouvre ladite zone de paroi annulaire progressivement rétrécie, moyennant quoi ladite bague de retenue interne est expansée radialement vers l'extérieur pour pousser lesdits seconds cliquets faisant saillie vers l'extérieur contre la surface interne dudit tuyau.

2. Raccord de tuyaux (1) comprenant :
un corps principal (3) ;
un élément tubulaire interne (4) s'étendant à partir du corps principal dans la direction axialement externe ;
un élément tubulaire externe (5) entourant l'élément tubulaire interne et ayant une paroi terminale (54) s'étendant radialement vers l'intérieur et une paroi annulaire progressivement rétrécie (55) s'inclinant vers l'intérieur dans la direction radialement externe, les éléments tubulaires interne et externe définissant un espace (10) pour recevoir une extrémité du tuyau entre eux ; et
une bague de retenue externe tubulaire (7) ayant une pluralité de bandes en porte-à-faux ayant chacune une extrémité libre (71) séparée par une pluralité de fentes (73) s'étendant de manière axiale, la bague de retenue externe (7) portant une pluralité de premiers cliquets (74) faisant saillie radialement vers l'intérieur pour appliquer une pression contre la surface externe dudit tuyau suite à la déformation élastique de la bague de retenue externe et une pluralité de seconds cliquets (75) faisant saillie radialement vers l'intérieur au niveau de ladite extrémité libre pour bloquer ledit tuyau lors du retrait du tuyau, ladite bague de retenue externe (7) étant mobile dans ledit espace (10) pour recevoir le tuyau entre ladite paroi terminale (54) et ladite paroi annulaire progressivement rétrécie (55) ;
dans lequel, lorsque le tuyau est inséré dans ledit espace (10) pour recevoir le tuyau en place et ensuite déplacé dans une direction pour retirer le tuyau, ladite bague de retenue externe (7) est déplacée conjointement avec le tuyau dans la même direction, à la suite de la mise en prise desdits premiers cliquets (74) faisant saillie vers l'intérieur avec la surface externe dudit tuyau, et l'extrémité libre de ladite bague de retenue externe recouvre ladite zone de paroi annulaire progressivement rétrécie, moyennant quoi ladite bague de retenue externe (7) est rétrécie radialement vers l'intérieur pour pousser lesdits seconds cliquets (75) faisant saillie vers l'intérieur contre la surface externe dudit tuyau.

3. Raccord de tuyaux (1) comprenant :
un corps principal (3) ;
un élément tubulaire interne (4) s'étendant à partir du corps principal dans la direction axialement externe et ayant une paroi terminale (44) s'étendant radialement vers l'extérieur et une paroi annulaire progressivement rétrécie (45) s'inclinant vers l'extérieur dans la direction axialement externe ;
un élément tubulaire externe (5) entourant l'élément tubulaire interne (4) et ayant la paroi terminale (54) s'étendant radialement vers l'intérieur et une paroi annulaire progressivement rétrécie (55) s'inclinant vers l'intérieur dans la direction axialement externe, les éléments tubulaires interne et externe définissant un espace (10) pour recevoir une extrémité du tuyau entre eux ;
une bague de retenue interne tubulaire (6) ayant une pluralité de bandes en porte-à-faux, ayant chacune une extrémité libre (61) séparée par une pluralité de fentes (63) s'étendant de manière axiale, la bague de retenue interne (6) portant une pluralité de premiers cliquets (64) faisant saillie radialement vers l'extérieur pour appliquer une pression contre la surface interne dudit tuyau suite à la déformation élastique de la bague de retenue interne et une pluralité de seconds cliquets (65) faisant saillie radialement vers l'extérieur au niveau de ladite extrémité libre pour bloquer ledit tuyau lors du retrait du tuyau, ladite bague de retenue interne (6) étant mobile dans ledit espace pour recevoir le tuyau entre ladite paroi terminale (54) et ladite paroi annulaire progressivement rétrécie (55) ; et
une bague de retenue externe (7) tubulaire ayant une pluralité de bandes en porte-à-faux, ayant chacune une extrémité libre (71) séparée par une pluralité de bandes (73) s'étendant de manière axiale, la bague de retenue externe portant une pluralité de premiers cliquets (74) faisant saillie radialement vers l'intérieur pour appliquer une pression contre la surface externe dudit tuyau suite à la déformation élastique de la bague de retenue externe et une pluralité de seconds cliquets (75) faisant saillie radialement vers l'intérieur au niveau de ladite extrémité libre pour bloquer ledit tuyau lors du retrait du tuyau, ladite bague de retenue externe (7) étant mobile dans ledit espace (10) pour recevoir le tuyau entre ladite paroi terminale (54) et ladite paroi annulaire progressivement rétrécie (55) ;
dans lequel, lorsque ledit tuyau est inséré dans ledit espace (10) pour recevoir le tuyau en place et ensuite déplacé dans une direction pour le retrait du tuyau, ladite bague de retenue interne (6) est déplacée conjointement avec le tuyau dans la même direction, à la suite de la mise en prise desdits premiers cliquets (64) faisant saillie vers l'extérieur avec la surface interne dudit tuyau, et l'extrémité libre de ladite bague de retenue interne (6) recouvre ladite zone de paroi annulaire progressivement rétrécie, moyennant quoi ladite bague de retenue interne (6) est expansée radialement vers l'extérieur pour pousser lesdits seconds cliquets (65) faisant saillie vers l'extérieur contre la surface interne dudit tuyau ; et ladite bague de retenue externe (7) est déplacée conjointement avec le tuyau dans la même direction, à la suite de la mise en prise desdits premiers cliquets (74) faisant saillie vers l'intérieur avec la surface externe dudit tuyau, et l'extrémité libre de ladite bague de retenue externe (7) recouvre ladite zone de paroi annulaire progressivement rétrécie, moyennant quoi ladite bague de retenue externe est rétrécie radialement vers l'intérieur pour pousser lesdits seconds cliquets (75) faisant saillie vers l'intérieur contre la surface externe dudit tuyau.

4. Raccord de tuyaux selon l'une des revendications 1 à 3, dans lequel ladite bague de retenue interne (6) comprend une partie renflée radialement vers l'extérieur (62) dans la zone centrale, et dans lequel ladite bague de retenue externe (7) comprend une partie rétrécie radialement vers l'intérieur (72) dans la zone centrale.

5. Raccord de tuyaux selon l'une des revendications 1 à 3, dans lequel lesdits premiers cliquets (64, 74) sont positionnés dans une position axialement interne par rapport auxdits seconds cliquets (74, 75).

6. Raccord de tuyaux selon la revendication 3, dans lequel lesdits premiers cliquets (64) faisant saillie vers l'extérieur sont positionnés dans une position axialement non alignée par rapport auxdits premiers cliquets (74) faisant saillie vers l'intérieur et dans lequel lesdits seconds cliquets (65) faisant saillie vers l'extérieur sont positionnés dans une position axialement non alignée par rapport auxdits seconds cliquets (75) faisant saillie vers l'intérieur.

7. Raccord de tuyaux selon l'une des revendications 1 à 3, dans lequel au moins une bague d'étanchéité (9, 9') est disposée sur la surface externe (40) dudit élément tubulaire interne (4) dans une position radialement alignée par rapport auxdits seconds cliquets (75) faisant saillie vers l'intérieur pour sceller l'espace entre ledit élément tubulaire interne (4) et le tuyau, ou bien dans lequel au moins une bague d'étanchéité (9, 9') est disposée sur la surface interne (50) dudit élément tubulaire externe (5) dans une position radialement alignée par rapport auxdits seconds cliquets (65) faisant saillie vers l'extérieur pour sceller l'espace entre ledit élément tubulaire externe (5) et le tuyau.

8. Raccord de tuyaux selon l'une des revendications 1 à 3, dans lequel la bague de retenue tubulaire (6, 7) est fabriquée à partir de polyphénylène sulfone ou polysulfure de phénylène ou un métal.

9. Raccord de tuyaux selon l'une des revendications 1 à 3, dans lequel ledit élément tubulaire externe (5) comprend au moins une ouverture (56) s'étendant radialement à travers ce dernier pour confirmer visuellement directement ou indirectement à l'aide d'un dispositif de confirmation (100) qu'un tuyau à été inséré en place dans ledit espace pour recevoir le tuyau.

10. Raccord de tuyaux selon l'une des revendications 1 à 3, dans lequel ledit corps principal (3) et ledit élément tubulaire interne (4) sont moulés de manière solidaire, d'un seul tenant.
